# EUROPÄISCHE PATENTANMELDUNG

(11) **EP 1 300 772 A2**
(43) Veröffentlichungstag der Anmeldung: **09.04.2003**
(21) Anmeldenummer: 02018740.7
(22) Anmeldetag: 22.08.2002
(51) Int. Cl.: G06F 17/27

(54) **Verfahren und Rechnereinheit zur Verarbeitung von Text**

(30) Priorität: 05.10.2001 DE 10149141
(71) Anmelder: ROBERT BOSCH GMBH, 70442 Stuttgart (DE)
(72) Erfinder: Mueller, Hans-Georg, 71287 Weissach (DE)

(57) **Zusammenfassung**

Es wird ein Verfahren zur Verabeitung von Text (5) in einer Rechnereinheit (1) und eine Rechnereinheit (1) vorgeschlagen, die eine Ermittlung zusammengesetzter Substantive im Text (5) ermöglichen, ohne dass Lexika erforderlich sind. Dabei wird ein Einzelwort im Text (5) als zusammengesetztes Substantiv erkannt, wenn die Buchstabenzahl eines charakteristischen Teiles des Einzelwortes einen vorgegebenen Wert (10) überschreitet.

## Beschreibung

### Stand der Technik

Die Erfindung geht von einem Verfahren zur Verarbeitung von Text und von einer Rechnereinheit nach der Gattung der unabhängigen Ansprüche aus.

Aus der Veröffentlichung "Zur Morphologie und Semantik von Nominalkomposita" von Stefan Langer, Tagungsband KONVENS 98, Bonn, S. 83-97 ist bereits ein Verfahren zur Verarbeitung von Text bekannt, bei dem zusammengesetzte Substantive im Text ermittelt werden. Dieses Verfahren ist lexikonbasiert. Dabei wird mit Hilfe von Lexika geprüft, ob ein Einzelwort aus mehreren Einzelsubstantiven zusammengesetzt ist. Dieses Verfahren wird mit Hilfe einer Rechnereinheit realisiert.

### Vorteile der Erfindung

Das erfindungsgemäße Verfahren zur Verarbeitung von Text und die erfindungsgemäße Rechnereinheit mit den Merkmalen der unabhängigen Ansprüche haben demgegenüber den Vorteil, dass ein Einzelwort im Text als zusammengesetztes Substantiv erkannt wird, wenn die Buchstabenzahl eines charakteristischen Teiles des Einzelwortes einen vorgegebenen Wert überschreitet. Auf diese Weise lässt sich ein zusammengesetztes Substantiv ohne den Einsatz eines Lexikons detektieren. Dadurch kann Speicherplatz für das Ablegen eines Lexikons eingespart werden. Außerdem kann die Detektion zusammengesetzter Substantive im Text erheblich beschleunigt werden, da ein zeitaufwendiger Vergleich mit Einträgen eines Lexikons nicht erforderlich ist.

Durch die in den Unteransprüchen aufgeführten Maßnahmen sind vorteilhafte Weiterbildungen und Verbesserungen des Verfahrens zur Verarbeitung von Text und der Rechnereinheit gemäß den unabhängigen Ansprüchen möglich.

Besonders vorteilhaft ist es, dass ein Einzelwort als Substantiv erkannt wird, wenn es mit einem Großbuchstaben beginnt. Dies ist besonders für deutschsprachige Texte eine besonders einfache und schnelle Möglichkeit, Substantive in einem Text zu detektieren.

Ein aufwendigeres, jedoch landessprachenunabhängiges Verfahren zur Detektion der Substantive lässt sich realisieren, wenn ein Einzelwort mit den Einträgen eines Lexikonspeichers verglichen wird, wobei das Einzelwort als Substantiv erkannt wird, wenn seine Grundform mit der Grundform eines als Substantiv gekennzeichneten Eintrages des Lexikonspeichers übereinstimmt. Dies wird als positive Auswahl bezeichnet. Alternativ werden in dem Lexikonspeicher nur Adjektive, Adverbien und Verben einge... Das Einzelwort wird dann als Substantiv erkannt, wenn es nicht mit einem Eintrag im Lexikonspeicher übereinstimmt. Dies wird als negative Auswahl bezeichnet.

Ein weiterer Vorteil besteht darin, dass als charakteristischer Teil des Substantives das ganze Substantiv gewählt wird. Auf diese Weise kann ein eigener Verfahrensschritt zur Ermittlung des charakteristischen Teils entfallen und das jeweilige, ermittelte Substantiv selbst als charakteristischer Teil desselben weiterverwendet werden.

Besonders vorteilhaft ist es, wenn der Wortstamm des Substantives gebildet und als charakteristischer Teil des Substantives gewählt wird. Auf diese Weise wird eine spätere Ermittlung der Häufigkeit der einzelnen detektierten zusammengesetzten Substantive im Text ermöglicht, die auch verschiedenen Deklinationsformen von Substantiven mit gleichem Wortstamm berücksichtigt.

Ein weiterer Vorteil besteht darin, dass der vorgegebene Wert in Abhängigkeit einer statistischen Verteilung der Buchstabenzahl des charakteristischen Teiles zusammengesetzter Substantive gewählt wird. Auf diese Weise lässt sich eine Aussage über die Wahrscheinlichkeit machen, mit der es sich bei den als zusammengesetzte Substantive detektierten Einzelworten tatsächlich um zusammengesetzte Substantive handelt.

Ein weiterer Vorteil besteht darin, dass für jedes ermittelte zusammengesetzte Substantiv dessen Häufigkeit im Text, ausgehend von seinem charakteristischen Teil, ermittelt wird. Dies ist besonders dann von Vorteil, wenn es sich bei dem charakteristischen Teil um den Wortstamm des zusammengesetzten Substantives handelt. In diesem Fall können unterschiedliche Deklinationsformen des entsprechenden zusammengesetzten Substantives bei der Ermittlung seiner Häufigkeit berücksichtigt werden.

### Zeichnung

Ein Ausführungsbeispiel der Erfindung ist der Zeichnung dargestellt und in der nachfolgenden Beschreibung näher erläutert.

Es zeigen
Figur 1 ein Blockschaltbild einer erfindungsgemäßen Rechnereinheit,
Figur 2 einen Ablaufplan für das erfindungsgemäße Verfahren und
Figur 3 eine Häufigkeitsverteilung des charakteristischen Teiles zusammengesetzter Substantive über der Buchstabenzahl.

### Beschreibung des Ausführungsbeispieles

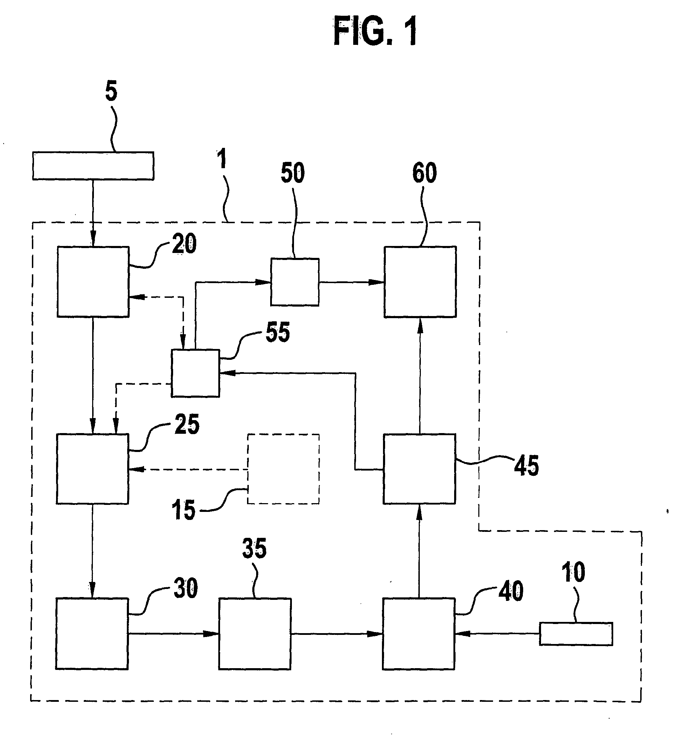

In Figur 1 kennzeichnet 1 eine Rechnereinheit, die bspw. als Computer ausgebildet ist. Die Rechnereinheit 1 umfasst Mittel 20 zur Ermittlung von Einzelworten eines Textes 5. Sie werden im Folgenden auch als Einzelwortermittlungsmittel bezeichnet. An die Einzelwortermittlungsmittel 20 sind Mittel 25 zur Detektion von als Substantiv ausgebildeten Einzelworten angeschlossen. Letztere Mittel werden im Folgenden auch als Substantivdetektionsmittel bezeichnet. An die Substantivdetektionsmittel 25 sind Mittel 30 zur Ermittlung eines charakteristischen Teiles mindestens eines detektierten Substantives angeschlossen. Letztere Mittel werden im Folgenden auch als Charakterermittlungsmittel bezeichnet. An die Substantivdetektionsmittel 25 kann optional ein Lexikonspeicher 15 angeschlossen sein, wie in Figur 1 gestrichelt dargestellt ist. An die Charakterermittlungsmittel 30 sind Mittel 35 zur Ermittlung der Buchstabenzahl des jeweiligen ermittelten charakteristischen Teiles angeschlossen. Letztere Mittel werden im Folgenden auch als Buchstabenzahlermittlungsmittel bezeichnet. An die Buchstabenzahlermittlungsmittel 35 sind Mittel 40 zum Vergleich der ermittelten Buchstabenzahl mit einem vorgegebenen Wert 10 angeschlossen. Letztere Mittel werden im Folgenden auch als Vergleichsmittel bezeichnet. Der vorgegebene Wert 10 kann dabei in einem dafür vorgesehenen Speicher oder Speicherplatz der Rechnereinheit 1 abgelegt sein. An die Vergleichsmittel 40 sind Mittel 45 zur Detektion des mindestens einen detektierten Substantives als zusammengesetztes Substantiv angeschlossen. Letztere Mittel werden im Folgenden auch als Detektionsmittel bezeichnet. An die Detektionsmittel 45 kann wie in Figur 1 dargestellt ein Speicher 55 angeschlossen sein. Weiterhin kann an die Detektionsmittel 45 eine Anzeigevorrichtung 60 wie in Figur 1 dargestellt angeschlossen sein. Weiterhin kann die Rechnereinheit 1 Mittel 50 zur Bestimmung der Häufigkeit jedes der ermittelten zusammengesetzten Substantive umfassen. Diese Mittel werden im Folgenden auch als Häufigkeitsermittlungsmittel bezeichnet. Dabei können die Häufigkeitsermittlungsmittel 50 einerseits an den Speicher 55 und andererseits an die Anzeigevorrichtung 60 angeschlossen sein.

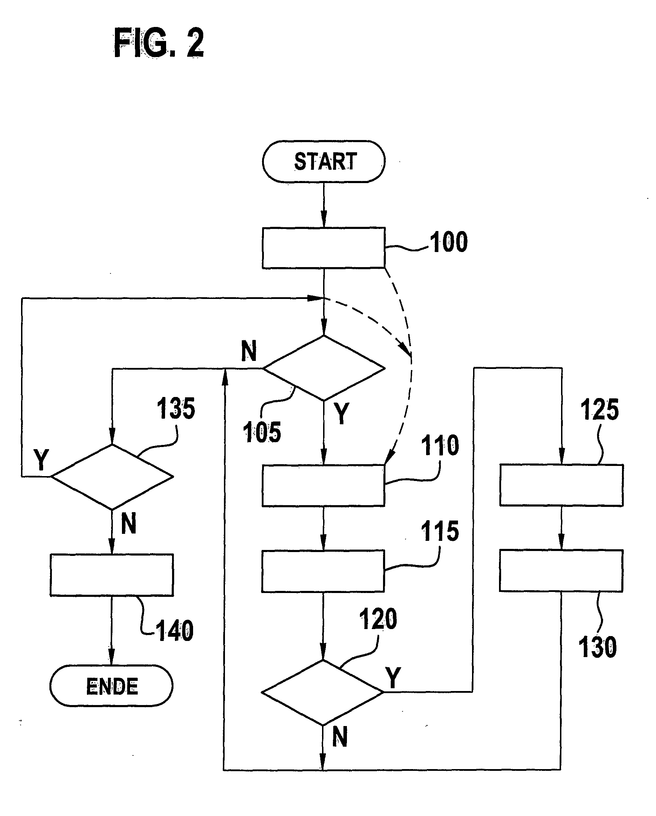

In Figur 2 ist der Ablauf des erfindungsgemäßen Verfahrens anhand eines Ablaufplanes dargestellt. Dabei wird zunächst der Text 5 bspw. aus einem Speichermedium von einer in Figur 1 nicht dargestellten Leseeinheit ausgelesen und den Einzelwortermittlungsmitteln 20 zugeführt. Der Text 5 kann aber auch auf jede beliebige andere bekannte Art und Weise den Einzelwortermittlungsmitteln 20 zugeführt werden. Bspw. könnte der Text 5 auch über eine Telekommunikationsschnittstelle den Einzelwortermittlungsmitteln 20 zugeführt werden. Der Text 5 könnte auf diese Weise bspw. über das Internet an die Rechnereinheit 1 bzw. an die Einzelwortermittlungsmittel 20 übertragen werden. Bei einem Programmpunkt 100 ermitteln die Einzelwortermittlungsmittel 20 sämtliche, im Text 5 vorkommende Einzelworte, die von ihrem unmittelbar benachbarten Einzelwort durch mindestens ein Leerzeichen oder Satzzeichen getrennt sind. Die so ermittelten Einzelworte des Textes 5 werden dann in den Einzelwortermittlungsmitteln 20 gespeichert. Alternativ können die ermittelten Einzelworte auch im Speicher 55 zwischengespeichert werden, wozu die Einzelwortermittlungsmittel 20 mit dem Speicher 55 verbunden sein müssen, wie an der gestrichelten Verbindung der Einzelwortermittlungsmittel 20 und des Speichers 55 in Figur 1 dargestellt ist.

Wenn die ermittelten Einzelworte in den Einzelwortermittlungsmitteln 20 gespeichert sind, dann werden sie sukzessive den Substantivdetektionsmitteln 25 zugeführt. Wenn die ermittelten Einzelworte im Speicher 55 abgespeichert sind, dann werden sie entweder sukzessive über die Einzelwortermittlungsmittel 20 an die Substantivdetektionsmittel 25 weitergeleitet oder, wie durch die gestrichelte Verbindung zwischen dem Speicher 55 und den Substantivdetektionsmitteln 25 in Figur 1 dargestellt, direkt sukzessive an die Substantivdetektionsmittel 25 weitergeleitet. Im letzteren Fall ist die Verbindung zwischen den Einzelwortermittlungsmitteln 20 und den Substantivdetektionsmitteln 25 nicht notwendig. Von Programmpunkt 100 wird zu einem Programmpunkt 105 verzweigt. Bei Programmpunkt 105 fordern die Substantivdetektionsmittel 25 von den Einzelwortermittlungsmitteln 20 bzw. vom Speicher 55 das jeweils nächste Einzelwort an und prüfen, ob es sich dabei um ein Substantiv handelt. Ist dies der Fall, so wird zu einem Programmpunkt 110 verzweigt, andernfalls wird zu einem Programmpunkt 135 verzweigt. Handelt es sich bei dem Text 5 um einen deutschsprachigen Text, so können die Substantivdetektionsmittel 25 bei Programmpunkt 105 prüfen, ob das gerade untersuchte Einzelwort mit einem Großbuchstaben beginnt. Ist dies der Fall, so wird es bei Programmpunkt 105 als Substantiv erkannt. Alternativ können die Substantivdetektionsmittel 25 bei Programmpunkt 105 das gerade untersuchte Einzelwort mit den Einträgen des Lexikonspeichers 15 vergleichen und das Einzelwort als Substantiv erkennen, wenn sein Wortstamm mit dem Wortstamm eines als Substantiv gekennzeichneten Eintrages des Lexikonspeichers 15 übereinstimmt, wenn der Lexikonspeicher Substantive enthält. Dies wird als positive Auswahl bezeichnet. Enthält der Lexikonspeicher Adjektive, Adverbien und Verben, so wird das Einzelwort als Substantiv dadurch erkannt, dass es mit keinem Eintrag im Lexikonspeicher übereinstimmt. Dies wird als negative Auswahl bezeichnet. Alternativ dazu kann es auch vorgesehen sein, dass die Substantivdetektionsmittel 25 gar nicht in der Rechnereinheit 1 vorgesehen sind und die Einzelwortermittlungsmittel 20 bzw. der Speicher 55 direkt mit den Charakterermittlungsmitteln 30 verbunden sind bzw. verbunden ist. In diesem Falle zweigt das Programm gemäß der gestrichelten Darstellung in Figur 2 direkt vom Programmpunkt 100 zum Programmpunkt 110 hin, so dass der Programmpunkt 105 nicht ausgeführt wird und eine Prüfung des gerade vorliegenden Einzelwortes dahingehend, ob es sich um ein Substantiv handelt, unterbleibt.

Der Vorteil, der sich bei Verwendung der Substantivdetektionsmittel 25 und der Ausführung des Programmpunktes 105, also der Prüfung, ob das gerade zu untersuchende Einzelwort ein Substantiv ist, ergibt besteht darin, dass nur solche Einzelworte dem weiteren Verfahrensablauf zugeführt werden müssen, die als Substantiv detektiert wurden, wohingegen die übrigen Einzelworte nicht weiter betrachtet werden. Dadurch wird der Rechen- und der Zeitaufwand für die Durchführung des erfindungsgemäßen Verfahrens verringert. Der Lexikonspeicher 15 ist nicht erforderlich, wenn die Substantivdetektionsmittel 25 bei Programmpunkt 105 ein Substantiv dadurch erkennen, dass es mit einem Großbuchstaben beginnt oder wenn auf die Substantivdetektionsmittel 25 und den Programmpunkt 105 völlig verzichtet wird und keine Prüfung dahingehend stattfindet, ob ein Einzelwort ein Substantiv ist oder nicht.

Bei Programmpunkt 110 ermitteln die Charakterermittlungsmittel 30 einen charakteristischen Teil des von den Substantivdetektionsmitteln 25 detektierten Substantives bzw. des von den Einzelwortermittlungsmitteln 20 oder dem Speicher 55 gerade zur Verfügung gestellten Einzelwortes. Im Folgenden soll beispielhaft der Fall betrachtet werden, in dem die Substantivdetektionsmittel 25 in der Rechnereinheit 1 wie in Figur 1 dargestellt vorgesehen sind, so dass nur solche Einzelworte an die Charakterermittlungsmittel 30 weitergeleitet werden, die als Substantiv bei Programmpunkt 105 von den Substantivdetektionsmitteln 25 detektiert wurden. Die von einschließlich Programmpunkt 110 an beschriebene Vorgehensweise ist unabhängig davon, ob sie mit einem als Substantiv detektierten Einzelwort oder mit einem beliebigen Einzelwort durchgeführt wird.

Der charakteristische Teil des detektierten Substantives kann auf verschiedene Art und Weise ermittelt werden. Eine erste Möglichkeit, einen charakteristischen Teil des detektierten Substantives zu wählen besteht darin, dass die Charakterermittlungsmittel 30 als charakteristischen Teil des detektierten Substantives bei Programmpunkt 110 das ganze Substantiv wählen. Dies ist am wenigsten aufwendig. Alternativ dazu können die Charakterermittlungsmittel 30 bei Programmpunkt 110 den Wortstamm des detektierten Substantives bilden und als charakteristischen Teil des detektierten Substantives den gebildeten Wortstamm wählen. Dies hat Vorteile bei einer später zu ermittelnden Häufigkeit der detektierten, zusammengesetzten Substantive, wie später beschrieben wird. Der Vorgang der Wortstammbildung wird auch als Lemmatisierung bezeichnet und ist bspw. aus der Druckschrift "Development of a stemming algorithm"; Mechanical Translation and Computational Linguistics, 11, 22-31 (1968) von B.J. Lovins, bekannt. Durch die Lemmatisierung wird ein Substantiv auf seinen Wortstamm abgebildet, dessen Buchstabenzahl dann in der Regel kleiner ist als die Buchstabenzahl der Grundform des Substantives. Die Lemmatisierung wird immer von der Endung her auf das Substantiv angewendet, so dass bei Anwendung auf zusammengesetzte Substantive automatisch, ohne dass bekannt sein muss, dass es sich um ein zusammengesetztes Substantiv handelt, das letzte Einzelsubstantiv in dem zusammengesetzten Substantiv der Lemmatisierung unterworfen wird. Dabei wird bspw. aus dem zusammengesetzten Substantiv "Krankenhäuser" nach der Lematisierung der Begriff "Krankenhaus", der den Wortstamm des Ausgangsbegriffes "Krankenhäuser" darstellt. Mit Hilfe der Lemmatisierung kann jedes beliebige Substantiv unabhängig davon, in welcher Deklinationsform es vorliegt, auf einen für alle Deklinationsformen dieses Substantives gleichen Wortstamm abgebildet werden. Dieser Wortstamm kann wie beschrieben als charakterisierender Teil des detektierten Substantives bei Programmpunkt 110 mit Hilfe der Lemmatisierung ermittelt werden. Anschließend wird zu einem Programmpunkt 115 verzweigt.

Bei Programmpunkt 115 ermitteln die Buchstabenzahlermittlungsmittel 35 die Buchstabenzahl des bei Programmpunkt 110 auf eine der beiden beispielhaft beschriebenen Arten ermittelten charakteristischen Teiles des detektierten Substantives. Anschließend wird zu einem Programmpunkt 120 verzweigt.

Bei Programmpunkt 120 vergleichen die Vergleichsmittel 40 die bei Programmpunkt 115 ermittelte Buchstabenzahl mit dem vorgegebenen Wert 10. Ist die Buchstabenzahl größer als der vorgegebene Wert 10, so wird zu Programmpunkt 125 verzweigt, bei dem die Detektionsmittel 45 aufgrund des Vergleichsergebnisses bei Programmpunkt 120 das detektierte Substantiv als zusammengesetztes Substantiv detektieren. Ist die Buchstabenzahl kleiner oder gleich dem vorgegebenen Wert, so wird von Programmpunkt 120 zu einem Programmpunkt 135 verzweigt. Von Programmpunkt 125 wird zu einem Programmpunkt 130 verzweigt, bei dem die Detektionsmittel 45 das detektierte, zusammengesetzte Substantiv in einer eigens dafür vorgesehenen Liste im Speicher 55 ablegen und ggf. zur Anzeige an der Anzeigevorrichtung 60 bringen. Anschließend wird zu Programmpunkt 135 verzweigt. Bei Programmpunkt 135 prüft eine Steuerung der Rechnereinheit 1, die mit sämtlichen beschriebenen Elementen der Rechnereinheit 1 verbunden und der Übersichtlichkeit halber in Figur 1 nicht dargestellt ist, ob im Speicher 55 bzw. in den Einzelwortermittlungsmitteln 20 ein weiteres, zu untersuchendes Einzelwort des Textes 5 vorliegt. Ist dies der Fall, so wird zu Programmpunkt 105 zurückverzweigt. Wennn der Programmpunkt 105 nicht vorgesehen ist, so wird wie in der gestrichelten Darstellung der Figur 2 dargestellt von Programmpunkt 135 bei Vorliegen eines weiteren Einzelwortes zu Programmpunkt 110 verzweigt. Liegt keine weiteres Einzelwort vor, so wird von Programmpunkt 135 zu einem Programmpunkt 140 verzweigt. Bei Programmpunkt 140 ermitteln die Häufigkeitsermittlungsmittel 50 die Häufigkeit, d.h. die Anzahl jedes der ermittelten, zusammengesetzten Substantive des Textes 5, die zwischenzeitlich in der speziell dafür vorgesehenen Liste im Speicher 55 abgelegt wurden. Die zusammengesetzten Substantive wurden dabei wie beschrieben in Form ihres charakteristischen Teiles ermittelt und daher auch in dieser Form im Speicher 55 abgespeichert. Somit ist die bei Programmpunkt 140 durch die Häufigkeitsermittlungsmittel 50 ermittelte Häufigkeit die Häufigkeit des jeweiligen charakteristischen Teiles der zusammengesetzten Substantive.

Wenn nun als charakteristischer Teil bei Programmpunkt 110 der Wortstamm verwendet wurde, so ergibt sich der Vorteil, dass die bei Programmpunkt 140 ermittelte Häufigkeit verschiedene Deklinationsformen ein- und desselben zusammengesetzten Substantives im Text 5 berücksichtigt. Somit werden bei der Ermittlung der Häufigkeit die Begriffe "Krankenhauses" und "Krankenhäuser" nicht als zwei verschiedene, zusammengesetzte Substantive gewertet, sondern als ein einziges, zusammengesetztes Substantiv mit der Häufigkeit 2.

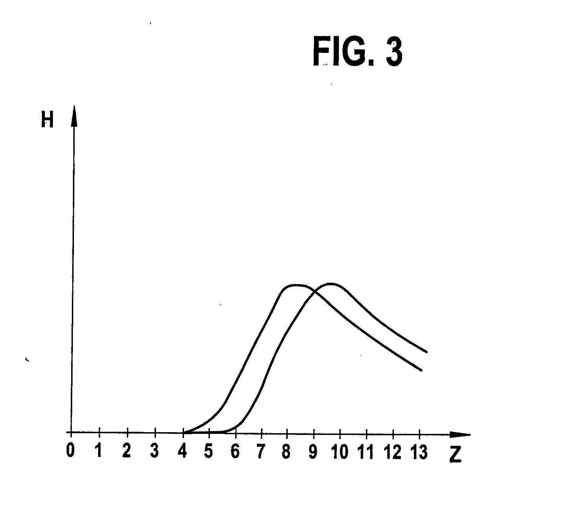

Der vorgegebene Wert 10 kann in Abhängigkeit einer statistischen Verteilung der Buchstabenzahl des charakteristischen Teiles zusammengesetzter Substantive gewählt werden. Das bedeutet, dass eine hinsichtlich des charakteristischen Teiles repräsentative Auswahl zusammengesetzter Substantive gebildet wird und eine Verteilung der Häufigkeit in Abhängigkeit der Buchstabenzahl ermittelt wird. Ein solcher Zusammenhang zwischen der Häufigkeit H und der Buchstabenzahl Z ist in Figur 3 beispielhaft und bezüglich der Amplitude der Häufigkeit H qualitativ dargestellt. Ein solcher Verlauf hängt natürlich von der zugrundeliegenden Sprache ab. Gemäß Figur 3 ist dabei ein Maximum der Häufigkeit, etwa bei der Buchstabenzahl acht, für den charakteristischen Teil zusammengesetzter Substantive erkennbar. Weiterhin ist am Beispiel der Figur 3 erkennbar, dass der überwiegende Teil zusammengesetzter Substantive einen charakteristischen Teil mit mehr als sechs Buchstaben umfasst. Als charakteristischer Teil soll dabei beispielhaft der Wortstamm betrachtet werden. Bei Betrachtung des kompletten Substantives als charakteristischer Teil würde sich der in Figur 3 dargestellt Verlauf nach rechts zu höheren Buchstabenanzahlen verschieben. Wählt man als vorgegebenen Wert 10 die Zahl sechs, so ist die Wahrscheinlichkeit, zusammengesetzte Substantive im Text 5 nicht zu erfassen, weil der charakteristische Teil sechs Buchstaben oder weniger umfasst, sehr gering, wenn man die Häufigkeitsverteilung gemäß Figur 3 zugrundelegt.

Der vorgegebene Wert 10 kann natürlich auch größer gewählt werden, wobei dann auch der Fehler bzw. die Wahrscheinlichkeit zunimmt, mit der zusammengesetzte Substantive in Text 5 bei Programmpunkt 120 und bei Programmpunkt 125 nicht erkannt werden. Je größer man den vorgegebenen Wert 10 wählt, umso kleiner wird auch die Wahrscheinlichkeit, dass Einzelsubstantive fälschlicherweise aufgrund ihrer über dem vorgegebenen Wert 10 liegenden Buchstabenanzahl ihres charakteristischen Teiles als zusammengesetzte Substantive erkannt werden. Der vorgegebene Wert kann beispielsweise zwischen einschließlich sechs und einschließlich neun liegen.

Das erfindungsgemäße Verfahren und die erfindungsgemäße Rechnereinheit 1 eignen sich besonders für die Verarbeitung von deutschsprachigen Texten, bei denen zusammengesetzte Substantive häufig anstelle von Wortgruppen aus mehreren Worten, wie bspw. im Englischen oder Französischen vorkommen.

Die durch die Häufigkeitsermittlungsmittel 50 ermittelten Häufigkeiten der im Speicher 55 abgelegten, detektierten zusammengesetzten Substantive können ebenfalls an der Anzeigevorrichtung 60 wiedergegeben werden. Die Wiedergabe von einzelnen Häufigkeiten kann dabei in Zuordnung zu den einzelnen charakteristischen Teilen der detektierten, zusammengesetzten Substantive an der Anzeigevorrichtung 60 erfolgen, zumal ja diese charakteristischen Teile im Speicher 55 abgelegt sind.

## Patentansprüche

1. Verfahren zur Verarbeitung von Text (5) in einer Rechnereinheit (1) bei dem zusammen gesetzte Substantive im Text (5) ermittelt werden, **dadurch gekennzeichnet, dass** ein Einzelwort im Text (5) als zusammen gesetztes Substantiv erkannt wird, wenn die Buchstabenzahl eines charakteristischen Teils des Einzelwortes einen vorgegebenen Wert (10) überschreitet.

2. Verfahren nach Anspruch 1, **dadurch gekennzeichnet, dass** in einem ersten'Schritt (105) geprüft wird, ob ein im Text (5) detektiertes Einzelwort ein Substantiv ist, dass bei positivem Prüfergebnis in einem zweiten Schritt (110) ein charakteristischer Teil des Substantivs ermittelt wird, dass in einem dritten Schritt (115) die Buchstabenzahl des charakteristischen Teils des Substantivs ermittelt wird, dass in einem vierten Schritt (120) die ermittelte Buchstabenzahl mit dem vorgegebenen Wert (10) verglichen wird und dass in einem fünften Schritt (125) das Substantiv als zusammen gesetztes Substantiv erkannt wird, wenn bei dem Vergleich im vierten Schritt (120) die Buchstabenzahl über dem vorgegebenen Wert (10) liegt.

3. Verfahren nach Anspruch 1 oder 2, **dadurch gekennzeichnet, dass** ein Einzelwort als Substantiv erkannt wird, wenn es mit einem Großbuchstaben beginnt.

4. Verfahren nach Anspruch 1, 2 oder 3, **dadurch gekennzeichnet, dass** ein Einzelwort mit den Einträgen eines Lexikonspeichers (15) verglichen wird und dass das Einzelwort als Substantiv erkannt wird, wenn sein Wortstamm mit dem Wortstamm eines als Substantiv gekennzeichneten Eintrags des Lexikonspeichers (15) übereinstimmt.

5. Verfahren nach einem der Ansprüche 1 bis 3, **dadurch gekennzeichnet, dass** ein Einzelwort mit den Einträgen eines Lexikonspeichers (15) verglichen wird und dass das Einzelwort als Substantiv erkannt wird, wenn sein Wortstamm von dem Wortstamm sämtlicher als Adjektiv, Adverb oder Verb gekennzeichneten Einträgen des Lexikonspeichers (15) verschieden ist.

6. Verfahren nach einem der vorherigen Ansprüche, **dadurch gekennzeichnet, dass** als charakteristischer Teil des Substantivs das ganze Substantiv gewählt wird.

7. Verfahren nach einem der Ansprüche 1 bis 5, **dadurch gekennzeichnet, dass** der Wortstamm des Substantivs gebildet und als charakteristischer Teil des Substantivs gewählt wird.

8. Verfahren nach einem der vorherigen Ansprüche, **dadurch gekennzeichnet, dass** der vorgegebene Wert (10) in Abhängigkeit einer statistischen Verteilung der Buchstabenzahl des charakteristischen Teils zusammen gesetzter Substantive gewählt wird.

9. Verfahren nach einem der vorherigen Ansprüche, **dadurch gekennzeichnet, dass** als vorgegebener Wert (10) eine Zahl zwischen einschließlich sechs und einschließlich neun gewählt wird.

10. Verfahren nach einem der vorherigen Ansprüche, **dadurch gekennzeichnet, dass** für jedes ermittelte zusammen gesetzte Substantiv dessen Häufigkeit im Text (5) ausgehend von seinem charakteristischen Teil ermittelt wird.

11. Rechnereinheit (1) zur Durchführung des Verfahrens nach einem der vorherigen Ansprüche, **dadurch gekennzeichnet, dass** Mittel (40) zum Vergleich der Buchstabenzahl eines charakteristischen Teils eines Einzelwortes mit einem vorgegebenen Wert (10) vorgesehen sind und dass Mittel (45) zur Detektion des Einzelwortes als zusammen gesetztes Substantiv bei Überschreiten des vorgegebenen Wertes (10) durch die Buchstabenzahl vorgesehen sind.

12. Rechnereinheit (1) nach Anspruch 11, **dadurch gekennzeichnet, dass** Mittel (20) zur Ermittlung von Einzelworten eines Textes (5) vorgesehen sind, das Mittel (25) zur Detektion von als Substantiv ausgebildeten Einzelworten vorgesehen sind, dass Mittel (30) zur Ermittlung eines charakteristischen Teils mindestens eines detektierten Substantivs vorgesehen sind, dass Mittel (35) zur Ermittlung der Buchstabenzahl des jeweiligen ermittelten charakteristischen Teils vorgesehen sind, dass die Mittel (40) zum Vergleich die ermittelte Buchstabenzahl mit dem vorgegebenen Wert (10) vergleichen und dass die Mittel (45) zur Detektion des Einzelwortes als zusammen gesetztes Substantiv das mindestens eine detektierte Substantiv als zusammen gesetztes Substantiv detektieren, wenn die ermittelte Buchstabenzahl den vorgegebenen Wert (10) überschreitet.

13. Rechnereinheit (1) nach Anspruch 12, **dadurch gekennzeichnet, dass** die Mittel (25) zur Detektion von als Substantiv ausgebildeten Einzelworten prüfen, ob ein Einzelwort mit einem Großbuchstaben beginnt, und dass diese Mittel (25) bei positivem Prüfergebnis dieses Einzelwort als Substantiv detektieren.

14. Rechnereinheit (1) nach Anspruch 12 oder 13, **dadurch gekennzeichnet, dass** ein Lexikonspeicher (15) vorgesehen ist, dass die Mittel (25) zur Detektion von als Substantiv ausgebildeten Einzelworten ein Einzelwort mit den Einträgen des Lexikonspeichers (15) vergleichen und dieses Einzelwort als Substantiv erkennen, wenn sein Wortstamm mit dem Wortstamm eines als Substantiv gekennzeichneten Eintrags des Lexikonspeichers (15) übereinstimmt.

15. Rechnereinheit nach Anspruch 12 oder 13, **dadurch gekennzeichnet, dass** ein Lexikonspeicher (15) vorgesehen ist, dass die Mittel (25) zur Detektion von als Substantiv ausgebildeten Einzelworten ein Einzelwort mit den Einträgen des Lexikonspeichers (15) vergleichen und dieses Einzelwort als Substantiv erkennen, wenn sein Wortstamm vom Wortstamm sämtlicher als Adjektiv, Adverb oder Verb gekennzeichneten Einträgen des Lexikonspeichers (15) verschieden ist.

16. Rechnereinheit (1) nach einem der Ansprüche 12, 13 bis 15, **dadurch gekennzeichnet, dass** die Mittel (30) zur Ermittlung eines charakteristischen Teils mindestens eines detektierten Substantivs als charakteristischen Teil das ganze Substantiv auswählen.

17. Rechnereinheit (1) nach einem der Ansprüche 12, 13 bis 15, **dadurch gekennzeichnet, dass** die Mittel (30) zur Ermittlung eines charakteristischen Teils mindestens eines detektierten Substantivs einen Wortstamm des Substantivs bilden und als charakteristischen Teil auswählen.

18. Rechnereinheit nach einem der Ansprüche 11 bis 17, **dadurch gekennzeichnet, dass** Mittel (50) zur Ermittlung der Häufigkeit jedes der ermittelten zusammen gesetzten Substantive im Text (5) vorgesehen sind.

19. Rechnereinheit nach Anspruch 18, **dadurch gekennzeichnet, dass** die Mittel (50) zur Ermittlung der Häufigkeit die Häufigkeit des jeweiligen charakteristischen Teils der zusammen gesetzten Substantive ermitteln.
